# EUROPEAN PATENT APPLICATION

(11) **EP 4 625 635 A1**
(43) Date of publication of application: **01.10.2025**
(21) Application number: 25166386.0
(22) Date of filing: 26.03.2025
(51) Int. Cl.: H01M 50/169

(54) **BATTERY HOUSING, ENERGY STORAGE DEVICE, AND ELECTRICITY-CONSUMPTION DEVICE**

(30) Priority: 29.03.2024 CN 202420644942 U
(71) Applicant: Xiamen Hithium Energy Storage Technology Co., Ltd., Xiamen, Fujian 361100 (CN)
(72) Inventor: ZHAO, Xue, Xiamen, Fujian 361100 (CN); JIANG, Shuo, Xiamen, Fujian 361100 (CN)
(74) Representative: Mewburn Ellis LLP

(57) **Abstract**

A battery housing includes a bottom case and a top cover. The bottom case includes a main case and a reinforcing rib. The main case is provided with an accommodating cavity and an opening, the accommodating cavity being located at an inner side of the main case, and the opening being located on the outer surface of the main case and communicated with the accommodating cavity. The reinforcing rib is fixedly connected to a side wall surface of the accommodating cavity, is spaced apart from both the opening and the bottom wall surface of the accommodating cavity, and extends along the circumferential direction of the main case. The first sub-reinforcing portion of the reinforcing rib includes a step surface facing the opening, the second sub-reinforcing portion is located on a side of the first sub-reinforcing portion facing away from the step surface and fixedly connected to the first sub-reinforcing portion.

## Description

### TECHNICAL FIELD

The present disclosure relates to the field of battery technologies, and in particular to a battery housing, an energy storage device and an electricity-consumption device.

### BACKGROUND

At present, a top cover and a housing of the energy storage device are commonly assembled by welding. There are significant notch stress and heat-affected areas near the welding position between the top cover and the housing, which reduce the strength of the housing. After the energy storage device undergoes multiple charging and discharging cycles, the housing is prone to cracking, and the reliability of the energy storage device is poor.

### SUMMARY

The present disclosure provides a battery housing, an energy storage device, and electricity-consumption device to address the stress concentration issue at the welding position between a top cover and the battery housing, improve the strength of the battery housing, extend the charge-discharge cycle life of the battery housing, and ensure the reliability of the energy storage device.

In a first aspect, the present application provides a battery housing, which includes a bottom case and a top cover. The bottom case includes a main case and a reinforcing rib. The main case includes an accommodating cavity and an opening. The accommodating cavity is located at an inner side of the main case, and the opening is located on an outer surface of the main case and communicated with the accommodating cavity. The reinforcing rib is fixedly connected to a side wall surface of the accommodating cavity and is spaced apart from both the opening and a bottom wall surface of the accommodating cavity. The reinforcing rib extends along a circumferential direction of the main case and includes a first sub-reinforcing portion and a second sub-reinforcing portion. The first sub-reinforcing portion includes a step surface facing the opening, and the second sub-reinforcing portion is located on a side of the first sub-reinforcing portion facing away from the step surface and is fixedly connected to the first sub-reinforcing portion. In a direction from the opening to the bottom wall surface of the accommodating cavity, a thickness of the second sub-reinforcing portion gradually decreases. The top cover is arranged in the accommodating cavity, is welded to the side wall surface of the accommodating cavity, abuts against the step surface, and seals the opening.

A ratio of the thickness of the first sub-reinforcing portion to the thickness of the main case is greater than or equal to 0.7 and less than or equal to 1.

The maximum thickness of the second sub-reinforcing portion is equal to a thickness of an end of the first sub-reinforcing portion facing the second sub-reinforcing portion.

A ratio of a height of the second sub-reinforcing portion to a height of the first sub-reinforcing portion is greater than or equal to 0.9 and less than or equal to 1.1.

The second sub-reinforcing portion includes an inner surface facing away from the side wall surface of the accommodating cavity. An angle between the inner surface and the side wall surface of the accommodating cavity is greater than 20 degrees and less than 40 degrees.

A ratio of the thickness of the top cover to a distance between the first sub-reinforcing portion and the opening is greater than or equal to 2 and less than or equal to 4.

A ratio of the height of the reinforcing rib to a thickness of the top cover is greater than or equal to 1 and less than or equal to 2.

In a second aspect, the present disclosure provides an energy storage device, which includes the aforementioned battery housing and an electrode assembly. The electrode assembly is located in the accommodating cavity.

The electrode assembly is located on a side of the second sub-reinforcing portion facing away from the first sub-reinforcing portion.

In a third aspect, the present disclosure provides an electricity-consumption device, which includes the aforementioned energy storage device. The energy storage device supplies power to the electricity-consumption device.

In the energy storage device of the present disclosure, the reinforcing rib on the inner side of the main case separates the load-bearing position of the top cover from the welding position of the top cover in the bottom case. This separates the stress concentration area and the heat-affected zone of the bottom case, improving the stress concentration issue at the welding position between the bottom case and the top cover, enhancing the strength of the bottom case, extending the charge-discharge cycle life of the bottom case, and ensuring the reliability of the energy storage device. Additionally, the thickness of the second sub-reinforcing portion gradually decreases in the direction from the opening toward the bottom wall surface of the accommodating cavity, which reduces the notch stress concentration caused by sudden changes in the dimensions of the bottom case, ensuring the reliability of the bottom case.

### BRIEF DESCRIPTION OF THE DRAWINGS

In order to illustrate the technical solutions in the embodiments of the present disclosure more clearly, the drawings used in the embodiments will be briefly introduced below.
FIG. 1 is a structural view of an energy storage system applied with an energy storage device of the present disclosure;
FIG. 2 is a structural view of an energy storage device of the present disclosure;
FIG. 3 is an exploded view of the energy storage device in FIG.2;
FIG. 4 is a structural view of a bottom case of the energy storage device in FIG.3;
FIG. 5 is a structural view of the bottom case in FIG.4 after being cut along I-I line;
FIG. 6 is a cross-sectional view of the bottom case in FIG.4 after being cut along I-I line;
FIG. 7 is a structural view of the energy storage device in FIG.2 after being cut along II-II line;
FIG. 8 is a cross-sectional view of the energy storage device in FIG.2 after being cut along II-II line;
FIG. 9 is a stress simulation view of a bottom case of a conventional energy storage device;
FIG.10 is a stress simulation view of a bottom case of an energy storage device of the present disclosure.

Illustration of reference signs:2000-photovoltaic panel, 3000-wind turbine, 4000-power grid, 1000-energy storage device, 5000-battery housing, 100-bottom case, 200-top cover, 101-accommodating cavity, 102-opening, 110-main case, 120-reinforcing rib, 111-bottom wall surface, 112-side wall surface, 122-first sub-reinforcing portion, 123-second sub-reinforcing portion, 121-step surface, 124-inner side surface, 210-main cover, 220-flange portion.

### DETAILED DESCRIPTION

The following clearly and completely describes the technical solutions in the embodiments of the present disclosure with reference to the accompanying drawings in the embodiments of the present disclosure.

Due to the strong temporal and spatial characteristics of the energy demand by people, in order to utilize energy rationally and improve energy efficiency, it is necessary to use a medium or device to store one form of energy in the same or another form, and then discharge it in a specific energy form based on future application needs. As is well known, the primary way to generate green electricity currently is to develop green energy sources such as photovoltaic power and wind power to replace fossil fuels. At present, the generation of green electricity generally relies on photovoltaic power, wind power, hydropower, etc. However, energy sources like wind and solar power often have problems of strong intermittency and high volatility, which can lead to grid instability, insufficient power during peak demand, excess power during low demand, and unstable voltage that can damage electrical systems. As a result, issues such as "wind and solar curtailment" may arise due to insufficient power demand or limited grid capacity. To address these problems, energy storage is essential. Energy storage involves converting electrical energy into other forms of energy through physical or chemical means and storing it, then converting it back into electrical energy when needed. In simple terms, energy storage is like a large "power bank" that stores electricity when photovoltaic and wind energy are abundant and releases the stored power when needed.

Taking electrochemical energy storage as an example, this solution provides an energy storage device that includes a set of chemical batteries. The chemical batteries primarily use chemical elements as the energy storage medium, and the charge-discharge process involves chemical reactions or changes in the storage medium. In simple terms, the electricity generated by wind and solar energy is stored in chemical batteries and released during peak demand or transferred to areas with power shortages.

Current energy storage applications are extensive, including energy storage on the generation side (wind and solar), grid-side energy storage, base station-side energy storage, and user-side energy storage. The corresponding types of energy storage devices include large energy storage containers and medium and small energy storage cabinets.
(1) Large energy storage containers used in grid-side energy storage scenarios, which can serve as high-quality active and reactive power regulation sources in the grid, achieving load matching in time and space, enhancing the ability to absorb renewable energy, and playing a significant role in grid system backup, alleviating peak load pressure, and frequency regulation.
(2) Medium and small energy storage cabinets used in commercial and industrial energy storage scenarios (e.g., banks, shopping malls), primarily operating in a "peak shaving and valley filling" mode. Due to significant price differences between peak and off-peak electricity, users with energy storage devices typically charge the storage cabinets during off-peak hours and discharge them during peak hours to reduce costs.

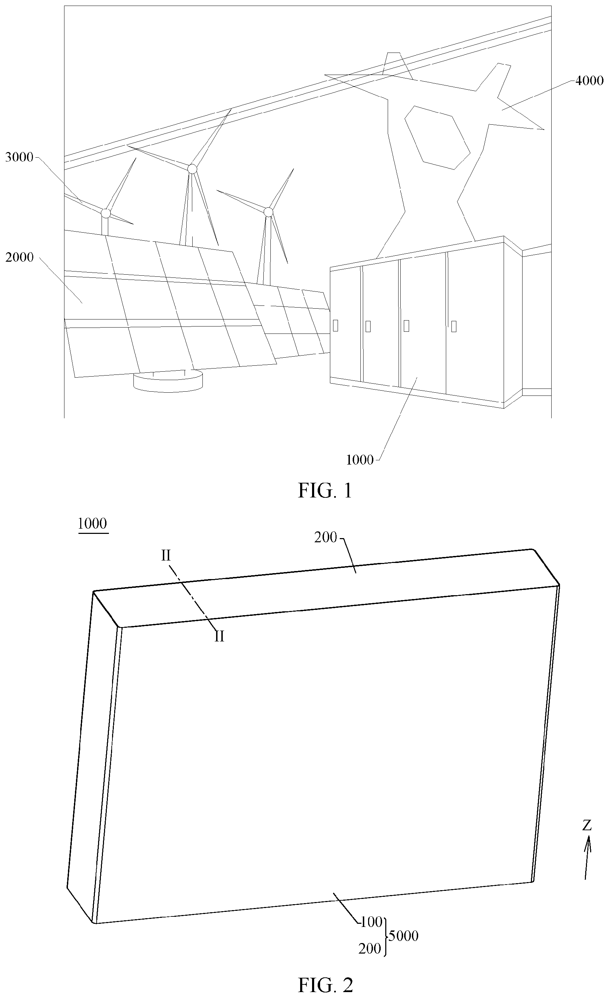

FIG. 1 illustrates a structural view of an energy storage system using an energy storage device of the present disclosure.

The energy storage device provided by the embodiments of the present disclosure is applied to the energy storage system that includes an electricity conversion device (photovoltaic panel 2000), a wind energy conversion device (wind turbine 3000), a power grid 4000, and an energy storage device 1000. The energy storage device 1000 can serve as an energy storage cabinet and can be installed outdoors. Specifically, the photovoltaic panel 2000 can convert solar energy into electricity during off-peak hours, and the energy storage device 1000 stores this electricity and supplies it to the power grid 4000 during peak demand or during power outages. The wind energy conversion device (wind turbine 3000) converts wind energy into electricity, and the energy storage device 1000 stores this electricity and supplies it to the power grid 4000 during peak demand or during power outages. The transmission of electricity can be achieved using high-voltage cables.

The number of energy storage devices 1000 can be multiple, the multiple energy storage devices 1000 can be connected in series or parallel, and can be supported and electrically connected by isolation plates (not shown). In this embodiment, "multiple" refers to two or more. The energy storage device 1000 can also be housed in an energy storage box for accommodation.

It can be understood that the energy storage device 1000 may include, but is not limited to, single cells, battery modules, battery packs, and battery systems. The actual application form of the energy storage device provided by the embodiments of the present disclosure is not limited to the listed products and may include other forms. The embodiments of the present disclosure do not impose strict limitations on the application form of the energy storage device 1000. In the embodiments of the present disclosure, a multi-cell battery is taken as an example of the energy storage device 1000.

In an embodiment of the present disclosure, a battery cell is taken as an example of the energy storage device 1000.

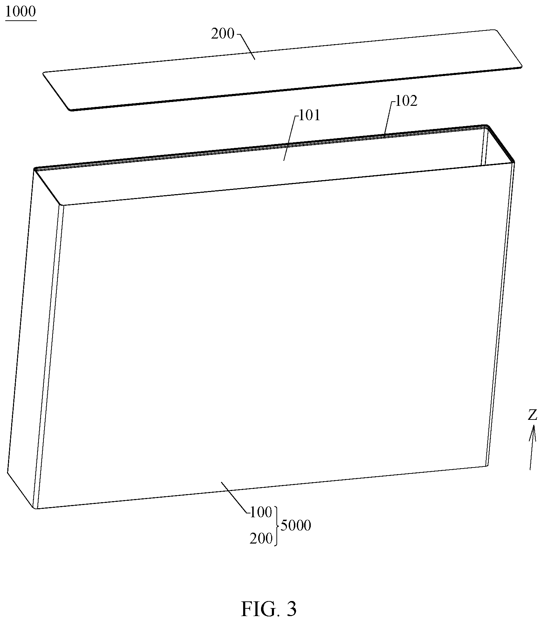

Figure 2 illustrates a structural view of the energy storage device 1000 in accordance with an embodiment of the present disclosure, and Figure 3 illustrates an exploded view of the energy storage device 1000 in Figure 2. A height direction of the energy storage device 1000 is described as the Z-axis direction.

In this embodiment, the energy storage device 1000 is a prismatic battery. The energy storage device 1000 includes a battery housing 5000 and an electrode assembly. The battery housing 5000 includes a bottom case 100 and a top cover 200. The bottom case 100 has an accommodating cavity 101 and an opening 102. The accommodating cavity 101 is located inside the bottom case 100 and accommodates an electrolyte. The opening 102 is located at the top side of the accommodating cavity 101 and is communicated with the accommodating cavity 101. The electrode assembly is arranged inside the bottom case 100. The electrode assembly is accommodated in the accommodating cavity 101 and immersed in the electrolyte. The top cover 200 is arranged in the accommodating cavity 101, seals the opening 102, and is electrically connected to the electrode assembly.

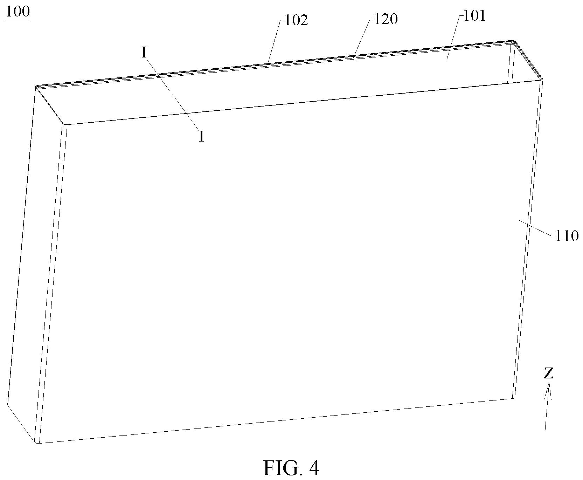

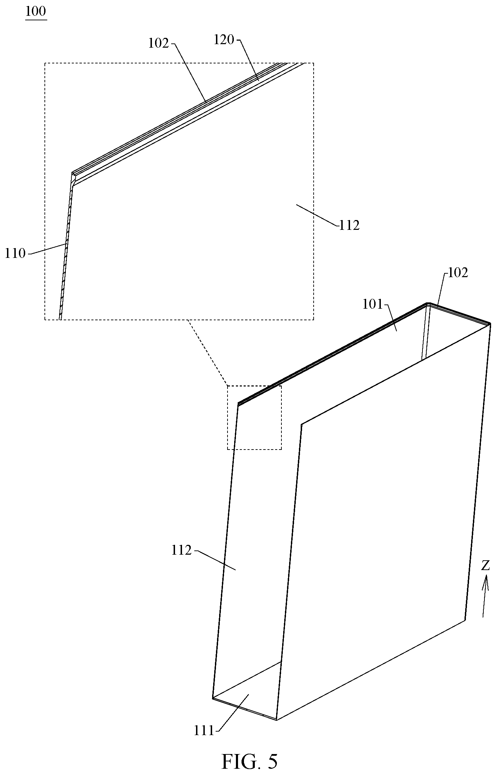

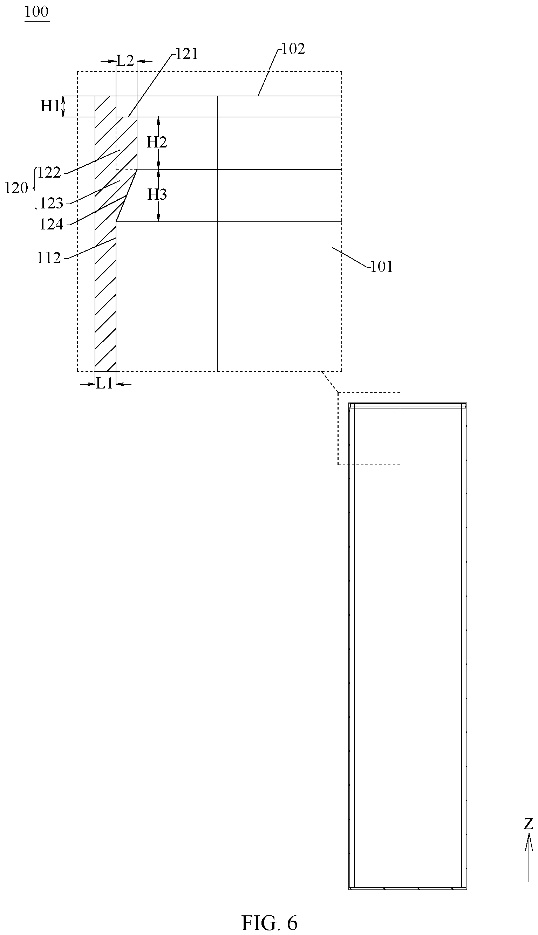

Figure 4 illustrates a structural view of the bottom case 100 of the energy storage device 1000 in Figure 3, Figure 5 illustrates a structural view of the bottom case 100 in Figure 4 after being cut along I-I line, and Figure 6 illustrates a cross-sectional view of the bottom case 100 in Figure 4 after being cut along I-I line. Cutting along I-I line refers to cutting along a plane where the line I-I located, and similar descriptions in the following text can be understood in the same way.

The bottom case 100 includes a main case 110 and a reinforcing rib 120. The reinforcing rib 120 is fixedly connected to the main case 110. For example, the main case 110 and the reinforcing rib 120 are integrally formed. The main case 110 is provided with the accommodating cavity 101 and the opening 102. The accommodating cavity 101 is located at an inner side of the main case 110. The accommodating cavity 101 has a bottom wall surface 111 and a side wall surface 112. The side wall surface 112 is connected to the bottom wall surface 111 and cooperatively surround the bottom wall surface 111. The opening 102 is located on an outer surface of the main case 110, communicates with the accommodating cavity 101, and is disposed opposite to the bottom wall surface 111. A thickness of the main case 110 is L1, that is, a thickness of a side wall of the accommodating cavity 101 is L1.

The reinforcing rib 120 is located in the accommodating cavity 101, is fixedly connected to the side wall surface 112 of the accommodating cavity 101, and is located between the opening 102 and the bottom wall surface 111 of the accommodating cavity 101. The reinforcing rib 120 is spaced apart from both the opening 102 and the bottom wall surface 111 of the accommodating cavity 101. A distance between the reinforcing rib 120 and the opening 102 is less than a distance between the reinforcing rib 120 and the bottom wall surface 111 of the accommodating cavity 101. That is, the reinforcing rib 120 is positioned closer to the opening 102 than the bottom wall surface 111 of the accommodating cavity 101. Specifically, the reinforcing rib 120 is located at a side of the electrode assembly facing the opening 102 and extends along the circumferential direction of the main case 110. The distance between the reinforcing rib 120 and the opening 102 is H1, and the maximum thickness of the reinforcing rib 120 is L2. That is, the height of a portion of the main case 110 above the reinforcing rib 120 is H1, and the maximum distance between a surface of the reinforcing rib 120 facing away from the side wall surface 112 of the accommodating cavity101 and the side wall surface 112 of the accommodating cavity 101 is L2.

It can be understood that the arrangement of the reinforcing rib 120 not only increases the thickness of the bottom case 100, but also increases a cross-sectional area of the stress concentration area in the bottom case 100, thereby reducing the stress borne by the stress concentration area in the bottom case 100, improving the strength of the bottom case 100, and ensuring the reliability of the energy storage device 1000. Moreover, since the reinforcing rib 120 is positioned adjacent to the opening 102, the space inside the bottom case 100 for accommodating the electrode assembly is not affected, and a volume utilization of the bottom case 100 can be improved, and the volume energy density of the energy storage device 1000.

In this embodiment, the reinforcing rib 120 is in the shape of a continuous ring. The shape of the reinforcing rib 120 matches the shape of the main case 110. For example, the main case 110 is cuboid-shaped, and the reinforcing rib 120 is rectangular ring. In other embodiments, the reinforcing rib 120 may also be in the form of discontinuous ring, such as multiple sub-reinforcing ribs arranged at intervals along the circumferential direction of the main case 110. The present disclosure does not impose specific limitations on the structure of the reinforcing rib 120.

The reinforcing rib 120 includes a first sub-reinforcing portion 122 and a second sub-reinforcing portion 123. The first sub-reinforcing portion 122 and the second sub-reinforcing portion 123 are fixedly connected to the side wall surface 112 of the accommodating cavity 101. The second sub-reinforcing portion 123 is fixedly connected to the first sub-reinforcing portion 122. The first sub-reinforcing portion 122 includes a step surface 121 facing the opening 102. The step surface 121 extends along the circumferential direction of the main case 110 and is configured to support the top cover 200. A distance between the step surface 121 and the opening 102 is H1, that is, a distance between the first sub-reinforcing portion 122 and the opening 102 is H1. The step surface 121 of the first sub-reinforcing portion 122 can support the top cover 200, ensuring consistent assembly pressure of the top cover 200 and improving the consistency of weld depth and appearance between the bottom case 100 and the top cover 200.

Additionally, a thickness of the first sub-reinforcing portion 122 is L2, and a height of the first sub-reinforcing portion is H2. That is, the distance between a surface of the first sub-reinforcing portion 122 facing away from the side wall surface 112 of the accommodating cavity 101 and the side wall surface 112 is L2, and the distance between a surface of the first sub-reinforcing portion 122 facing the opening 102 and a surface of the first sub-reinforcing portion 122 facing away from the opening 102 is H2. The first sub-reinforcing portion 122 not only supports the top cover 200 but also increases the thickness of the bottom case 100, thereby enhancing the strength of the bottom case 110 and reducing the stress concentration effect in the bottom case 110. Therefore, it helps to extend the service life of the bottom case 100 and ensures the reliability of the energy storage device 1000.

The ratio of the thickness L2 of the first sub-reinforcing portion 122 to the thickness L1 of the main case 110 is greater than or equal to 0.7 and less than or equal to 1. This ensures that the first sub-reinforcing portion 122 provides sufficient support strength for the t cover 200 while not occupying excessive internal space of the bottom case 100, thereby helping to minimize the impact of the first sub-reinforcing portion 122 on the energy density of the energy storage device 1000. For example, the ratio of the thickness L2 of the first sub-reinforcing portion 122 to the thickness L1 of the main case 110 is 0.8, in which case L1 + L2 = 1.8 * L1, or the ratio of the thickness L2 of the first sub-reinforcing portion 122 to the thickness L1 of the main case 110 is 1, in which case L2 = L1.

The second sub-reinforcing portion 123 is located on a side of the first sub-reinforcing portion 122 facing the electrode assembly. That is, the second sub-reinforcing portion 123 is located on a side of the first sub-reinforcing portion 122 facing away from the opening 102. Specifically, the second sub-reinforcing portion 123 is fixedly connected to a surface of the first sub-reinforcing portion 122 facing away from the opening 102. In the direction from the opening 102 toward the bottom wall surface 111 of the accommodating cavity 101 (i.e., the negative Z-axis direction in the diagram), the thickness of the second sub-reinforcing portion 123 gradually decreases to reduce notch stress concentration caused by sudden changes in the dimensions of the bottom case 100, ensuring the reliability of the bottom case 100. For example, the maximum thickness of the second sub-reinforcing portion 123 is equal to the thickness L2 of an end of the first sub-reinforcing portion 122 facing the second sub-reinforcing portion 123, and the minimum thickness of the second sub-reinforcing portion 123 is 0, achieving a smooth transition between the first sub-reinforcing portion 122 and the main case 110, thereby reducing notch stress concentration caused by sudden changes in the dimensions of the bottom case 100 and ensuring the reliability of the bottom case 100.

The second sub-reinforcing portion 123 includes an inner surface 124 facing away from the side wall surface 112 of the accommodating cavity 101. In a direction from the opening 102 toward the bottom wall surface 111 of the accommodating cavity 101, a distance between the inner surface 124 and the sidewall surface 112 of the accommodating cavity 101 gradually decreases. An angle θ between the inner surface 124 and the sidewall surface 112 of the accommodating cavity 101 is greater than 20 degrees and less than 40 degrees, achieving a smooth transition between the first sub-reinforcing portion 122 and the main case 110, thereby reducing notch stress concentration caused by sudden changes in the dimensions of the bottom case 100 and ensuring the reliability of the bottom case 100. For example, the inner surface 124 is an inclined surface, and the angle θ between the inner surface 124 and the sidewall surface 112 of the accommodating cavity 101 is 21 degrees.

Additionally, a height of the second sub-reinforcing portion 123 is H3. That is, the distance between the surface of the second sub-reinforcing portion 123 facing the first sub-reinforcing portion 122 and the surface of the second sub-reinforcing portion 123 facing away from the first sub-reinforcing portion 122 is H3. A ratio of the height H3 of the second sub-reinforcing portion 123 to the height H2 of the first sub-reinforcing portion 122 is greater than or equal to 0.9 and less than or equal to 1.1, ensuring effective support of the second sub-reinforcing portion 123 to the first sub-reinforcing portion 122 and contributing to the improved strength of the bottom case 100. For example, the ratio of the height H3 of the second sub-reinforcing portion 123 to the height H2 of the first sub-reinforcing portion 122 is 1, in which case H3 = H2.

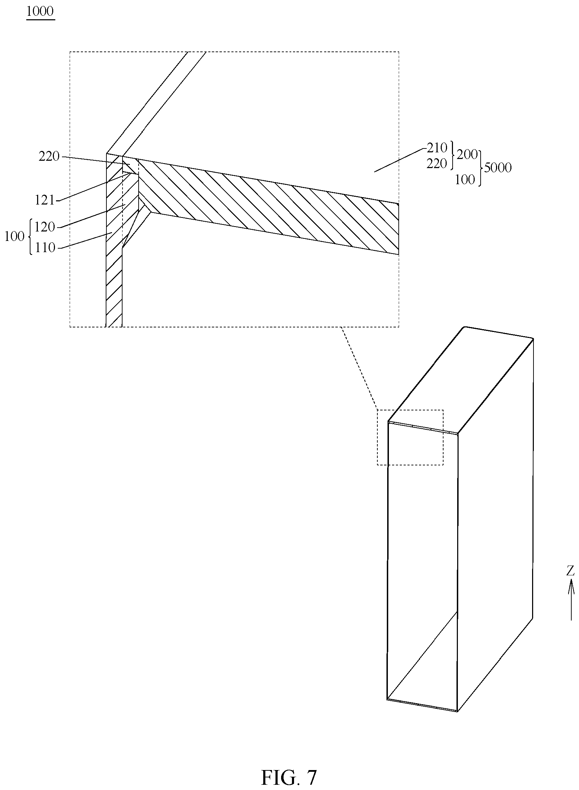

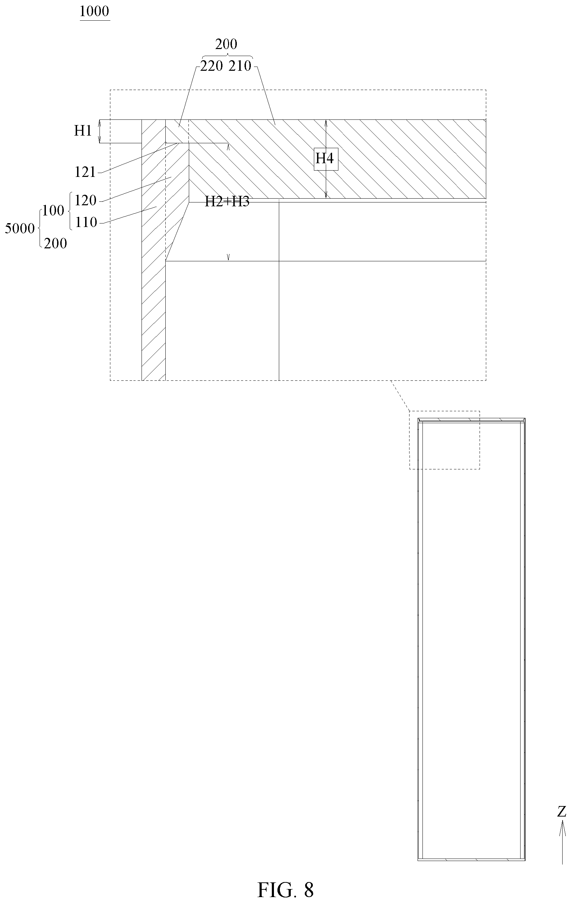

Figure 7 illustrates a structural view of the energy storage device 1000 in Figure 2 after being cut along II-II line, and Figure 8 illustrates a cross-sectional view of the energy storage device 1000 in Figure 2 after being cut along II-II line.

The top cover 200 is welded to the side wall surface 112 of the accommodating cavity 101 and abuts against the step surface 121 of the first sub-reinforcing portion 122. In this embodiment, the reinforcing rib 120 is arranged on the inner side of the main case 110, the step surface 121 of the reinforcing rib 120 supports the top cover 200, and the main case 110 is welded to the top cover 200, thus a welding position of the bottom case 100 welding to the top cover 200 and a support position of the main case 100 supporting the top cover 200 are separated, thereby separating the stress concentration area and the heat-affected zone of the bottom case 100, improving the stress concentration issue at the welding position between the bottom case 100 and the top cover 200, enhancing the strength of the bottom case 100, and ensuring the reliability of the energy storage device 1000.

A thickness of the top cover 200 is H4. The ratio of the thickness H4 of the top cover 200 to the distance H1 between the first sub-reinforcing portion 122 and the opening 102 is greater than or equal to 2 and less than or equal to 4, and the ratio of the thickness H2 + H3 of the reinforcing rib 120 to the thickness H4 of the top cover 200 is greater than or equal to 1 and less than or equal to 2, ensuring effective support of the step surface 121 of the reinforcing rib 120 to the top cover 200. For example, the ratio of the thickness H4 of the top cover 200 to the distance H1 between the first sub-reinforcing portion 122 and the opening 102 is 3, and the ratio of the thickness H2 + H3 of the reinforcing rib 120 to the thickness H4 of the top cover 200 is 1.5, in which case H4 = 3 * H1 and H2 + H3 = 1.5 * H4.

In this embodiment, the top cover 200 includes a main cover 210 and a flange portion 220. The flange portion 220 is fixedly connected to the peripheral surface of the main cover 210 and surrounds the main cover 210. For example, the main cover 210 and the flange portion 220 are integrally formed. Specifically, the main cover 210 is inserted in the space defined by the inner side surface of the reinforcing rib 120, and the flange portion 220 abuts against the step surface 121 of the first sub-reinforcing portion 122.

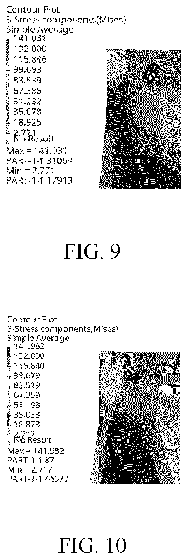

Figure 9 illustrates a stress simulation view of a bottom case of a conventional energy storage device, and Figure 10 illustrates a stress simulation view of a bottom case of an energy storage device of the present disclosure.

As illustrated in Figures 9 and 10, compared with the battery housing of the existing energy storage device, the area of the stress concentration region with stress greater than 132 MPa in the bottom case 100 of the energy storage device 1000 of the present disclosure is smaller. Therefore, the design of the reinforcing rib 120 in the present disclosure effectively improves the issue of low strength at the welding position between the bottom case 100 and the top cover 200 caused by the overlap of the heat-affected zone and the stress concentration region in the bottom case 100.

In the energy storage device 1000 of the present disclosure, by designing the reinforcing rib 120 on the inner side of the main case 110, the support position of the bottom case 100 supporting the top cover 200 and the welding position of the bottom case 100 welding to the top cover 200 are separated, thereby separating the stress concentration area and the heat-affected zone of the bottom case 100, improving the stress concentration issue at the welding portion between the bottom case 100 and the top cover 200, enhancing the strength of the bottom case 100, extending the charge-discharge cycle life of the bottom case 100, and ensuring the reliability of the energy storage device 1000. Additionally, the thickness of the second sub-reinforcing portion 123 gradually decreases in the direction from the opening 102 toward the bottom wall surface 111 of the accommodating cavity 101, reducing notch stress concentration caused by sudden changes in the dimensions of the bottom case 100 and ensuring the reliability of the bottom case 100.

The embodiments of the present disclosure also provide an electricity-consumption device, which includes the aforementioned energy storage device 1000. The energy storage device 1000 supplies power to the electricity-consumption device. The electricity-consumption device may be a new energy vehicle, an energy storage power station, a server, or other devices that require electricity.

The above description is only specific implementations of the present disclosure, but the scope of protection of the present disclosure is not limited thereto. Any person skilled in the art can easily think of changes or substitutions within the technical scope disclosed in the present disclosure, which should be covered within the scope of protection of the present disclosure. In the case of no conflict, the embodiments of the present disclosure and the features in the embodiments can be combined with each other. Therefore, the scope of protection of the present disclosure shall be subject to the scope of protection of the claims.

## Claims

1. **A battery** housing (5000) , comprising a bottom case (100) and a top cover (200) , wherein the bottom case (100) comprises a main case (110) and a reinforcing rib (120) ;
the main case (110) is provided with an accommodating cavity (101) and an opening (102) , the accommodating cavity (101) is located at an inner side of the main case (110) , the opening (102) is located on an outer surface of the main case and communicated with the accommodating cavity (101) ;
the reinforcing rib (120) is fixedly connected to a side wall surface(112) of the accommodating cavity(112), is spaced apart from both the opening (102) and a bottom wall surface (111) of the accommodating cavity(101), and extend along a circumferential direction of the main case(110), the reinforcing rib(120) comprises a first sub-reinforcing portion(122) and a second sub-reinforcing portion(123), the first sub-reinforcing portion(122) comprises a step surface(121) facing the opening(102), the second sub-reinforcing portion(123) is located on a side of the first sub-reinforcing portion(122) facing away from the step surface(121) and is fixedly connected to the first sub-reinforcing portion(122), and a thickness of the second sub-reinforcing portion(123) gradually decreases in a direction from the opening(102) to the bottom wall surface(111) of the accommodating cavity(111); and
the top cover (200) is arranged in the accommodating cavity(101), is welded to the side wall surface(112) of the accommodating cavity(112), abuts against the step surface(121), and seals the opening(102).

2. The battery housing (5000) of claim 1, wherein a ratio of a thickness of the first sub-reinforcing portion (122) to a thickness of the main case (110) is greater than or equal to 0.7 and less than or equal to 1.

3. The battery housing (5000) of claim 1 or 2, wherein the maximum thickness of the second sub-reinforcing portion (123) is equal to a thickness of an end of the first sub-reinforcing portion (122) facing the second sub-reinforcing portion (123).

4. The battery housing (5000) of claim 1 or 2, wherein a ratio of a height of the second sub-reinforcing portion (123) to a height of the first sub-reinforcing portion (122) is greater than or equal to 0.9 and less than or equal to 1.1.

5. The battery housing (5000) of claim 1 or 2, wherein the second sub-reinforcing portion (123) comprises an inner surface (124) facing away from the side wall surface (112) of the accommodating cavity (112), and an angle between the inner surface (124) and the side wall surface (112) of the accommodating cavity (112) is greater than 20 degrees and less than 40 degrees.

6. The battery housing(5000) of claim 1, wherein a ratio of a thickness of the top cover (200) to a distance between the first sub-reinforcing portion(122) and the opening(102) is greater than or equal 2 and less than or equal 4.

7. The battery housing(5000) of claim 1, wherein a ratio of a height of the reinforcing rib(120) to a thickness of the top cover (200) is greater than or equal to 1 and less than or equal to 2.

8. The battery housing of claim 1, wherein the reinforcing rib is in the shape of a continuous ring, the shape of the reinforcing matches the shape of the main case.

9. The battery housing of claim 1, wherein the reinforcing rib comprises multiple sub-reinforcing ribs arranged at intervals along a circumferential direction of the main case.

10. An energy storage device (1000), comprising a battery housing (5000) in any one of claims 1 to 9 and an electrode assembly, wherein the electrode assembly is located in the accommodating cavity (101).

11. The energy storage device (1000) of claim 10, wherein the electrode assembly is located on a side of the second sub-reinforcing portion (123) facing away from the first sub-reinforcing portion (122).

12. An electricity-consumption device, comprising an energy storage device (1000) in any one of claims 10 toll, wherein the energy storage device (1000) supplies power to the electricity-consumption device.
